## Europäisches Patentamt
## European Patent Office
## Office européen des brevets

(19)

(11) Veröffentlichungsnummer: **0 108 284**
**B1**

(12) **EUROPÄISCHE PATENTSCHRIFT**

(45) Veröffentlichungstag der Patentschrift:
09.08.89

(51) Int. Cl.⁴: **G 06 F 11/16**

(21) Anmeldenummer: 83110222.3

(22) Anmeldetag: 13.10.83

(54) Taktstromversorgung für ein Multimikrocomputersystem in Eisenbahnsicherungsanlagen.

(30) Priorität: 08.11.82 DE 3241189

(43) Veröffentlichungstag der Anmeldung:
16.05.84 Patentblatt 84/20

(45) Bekanntmachung des Hinweises auf die Patenterteilung: 09.08.89 Patentblatt 89/32

(84) Benannte Vertragsstaaten:
AT CH DE LI NL SE

(56) Entgegenhaltungen:
GB—A— 2 000 651
US—A— 4 239 982
PATENTS ABSTRACTS OF JAPAN, Band 6, Nr. 171 (P-140)[1049], 4. September 1982; & JP-A-57 89 170 (HITACHI SEISAKUSHO K.K.) 03-06-1982
ELEKTRONISCHE RECHENANLAGEN, Band 22, Nr. 5, Seiten 229-236, München, DE; H.J. LOHMANN: "Sicherheit von Mikrocomputern für die Eisenbahnsignaltechnik"
Siemens -Zeitschrift 48 (1974),Heft 7, Seiten 503-506

(73) Patentinhaber: Siemens Aktiengesellschaft Berlin und München
Wittelsbacherplatz 2
D-8000 München 2 (DE)

(72) Erfinder: Gronemeyer, Michael, Dipl.-Ing.
Broitzemer Strasse 256
D-3300 Braunschweig (DE)

## Beschreibung

Die Erfindung bezieht sich auf eine Taktstromversorgung für ein Multimikrocomputersystem in Eisenbahnsicherungsanlagen, bei denen die Mikrocomputer aus Sicherheitsgründen dieselben Daten verarbeiten, wobei für jeden Mikrocomputer zum Erzeugen eines Systemtaktes ein gesonderter Taktversorgungsbaustein mit eigenem Zeitnormal vorgesehen ist und alle Taktversorgungsbausteine an einen gemeinsamen Quarzgenerator angeschlossen sind.

Bei Multimikrocomputersystemen mit Sicherheitsverantwortung, wie beispielsweise im Einsatz bei Eisenbahnsicherungsanlagen, ist es erforderlich, daß mehrere gleichzeitig gleichartige datenverarbeitende Schaltwerke so durch eine spezielle Taktstromversorgung gemeinsam gesteuert werden, daß schließlich ausgangsseitig Daten zur Verfügung stehen, die auf Übereinstimmung prüfbar sind. Ein Multimikrocomputersystem kann so organisiert sein, daß alle sicherheitsrelevanten Prozeßdaten nur dann an den Prozeß abgegeben werden, wenn festgestellt werden konnte, daß die Mehrzahl der Mikrocomputer des Multimikrocomputersystems dieselben Ausgangsinformationen ermittelt hat. Um die Fehleroffenbarungszeit möglichst gering zu halten, können auch bereits gleichartige Zwischenergebnisse und darüber hinaus andere gleichartige Daten und/oder Adressen der einzelnen Mikrocomputer des Multimikrocomputersystems miteinander verglichen werden, damit ein evtl. Fehler in einem der Mikrocomputer zu einem möglichst frühen Zeitpunkt erkannt werden kann. Das frühzeitige Erkennen eines Fehlers hat außerdem den Vorteil, daß ein u. U. mit einiger Wahrscheinlichkeit eintretender zweiter Fehler in einem der anderen Mikrocomputer nicht zu einem derartigen Doppelfehler führt, daß eine Erkennung der Fehler durch einen Vergleichsvorgang nicht mehr möglich ist.

Voraussetzung für das Durchführen der für ein Multimikrocomputersystem in Eisenbahnsicherungsanlagen erforderlichen Vergleiche ist eine spezielle Taktstromversorgung, die es ermöglicht, die einzelnen Mikrocomputer des Multimikrocomputersystems taktsynchron arbeiten zu lassen. Eine Taktstromversorgung der eingangs genannten Art ist bekannt (Siemens-Zeitschrift 48 (1974), Heft 7, Seiten 503 bis 506, « Taktstromversorgung und Überwachung im URTL-Schaltkreissystem U1 »). Bei dieser bekannten Schaltung gibt ein quarzstabilisierter Generator Impulse ab, die mehrere Taktversorgungsbausteine steuern. Jeder Taktversorgungsbaustein versorgt ein ihm zugeordnetes Schaltwerk mit den erforderlichen Taktimpulsen. Jeder Taktversorgungsbaustein weist ein eigenes Zeitnormal auf, und zwar in Form von in Reihe geschalteten monostabilen Kippstufen. Diese sind so geschaltet, daß jeweils nach dem Zurückfallen in den stabilen Zustand die nächstfolgende monostabile Kippstufe der jeweiligen Reihenschaltung angesteuert wird, die nach ihrem Zurückfallen in die stabile Lage eine weitere monostabile Kippstufe betätigt und so fort. Die in jeder Reihenschaltung an letzter Stelle vorgesehene monostabile Kippstufe erzeugt einen sehr schmalen Fensterimpuls, in den zeitlich der nächste vom quarzstabilisierten Generator abgegebene Impuls fallen muß, damit die in jeder Reihenschaltung an erster Stelle vorgesehene monostabile Kippstufe wieder betätigt wird und der erläuterte Vorgang erneut ablaufen kann. Für diese Taktversorgungsbausteine ist wesentlich, daß diese nur so lange dynamische Signale ausgeben, wie die jeweils in Reihe geschalteten monostabilen Kippstufen eine Art dynamischen Selbsthaltekreis bilden. Sobald die Periodendauer des quarzstabilisierten Generators infolge eines Defektes nicht mehr mit der Gesamtlaufzeit der in Reihe geschalteten monostabilen Kippstufen übereinstimmt, bricht der genannte Selbsthaltekreis zusammen, und der jeweilige Taktversorgungsbaustein gibt nur noch statische Signale aus, die aber von den nachgeordneten zu steuernden Einrichtungen nicht für Datenverarbeitungszwecke brauchbar sind. Ein derartiger Abschaltvorgang ergibt sich auch, wenn beispielsweise die Gesamtlaufzeit eines Taktbausteines sich infolge eines Defektes änderte. Somit können die durch den Steuerpulserzeuger betriebenen Schaltwerke im Störungsfalle keine für den Betrieb gefährlichen Informationen ausgeben.

Die bekannten Taktstromversorgungen haben sich im Prinzip gut bewährt, und zwar schon aus dem Grunde, weil bei einem fehlerhaften Taktversorgungsbaustein der andere bzw. die übrigen Taktversorgungsbausteine nicht zu einem gleichartigen Fehllauf der angeschlossenen Schaltwerke führen.

Nun läßt sich die bekannte Taktstromversorgung nicht ohne weiteres mit demselben Erfolg bei Multimikrocomputersystemen anwenden, die vorzugsweise mit einem relativ hohen Systemtakt arbeiten. Das liegt daran, daß zwischen den einzelnen Taktversorgungsbausteinen hinsichtlich der erzeugten Pulse Phasendifferenzen eintreten können. Dies macht sich besonders bei hohen Verarbeitungsfrequenzen bezüglich der Vergleiche von Ausgangssignalen negativ bemerkbar.

Aus der US-A- 4 239 982 ist eine fehlertolerante Taktversorgungsanlage bekannt, bei welcher die Taktgeneratoren als Phasenregler ausgeführt sind. Diese allgemeine Maßnahme reicht für die Taktversorgung eines Multimikrocomputersystems der eingangs angegebenen Art nicht aus, da sich zwischen zu vergleichenden Ausgangssignalen trotzdem noch unerwünschte zeitliche Verschiebungen ergeben können. Dies kann zu vorzeitigen Abschaltvorgängen des Multimikrocomputersystems führen.

Der Erfindung liegt die Aufgabe zugrunde, eine Taktstromversorgung für ein Multimikrocomputersystem der o. g. Art dahingehend weiterzubilden, daß die von den Taktversorgungsbausteinen unter Beibehaltung ihres eigenen Zeitnormals an die zugeordneten Mikrocomputer abgegebenen Systemtakte bei ordnungsgerechtem Betrieb der Taktstromversorgung eng tolerierte Phasenlagen zueinander haben. Die einzelnen Taktversorgungsbausteine sollen untereinander so weit entkoppelt sein, daß beim Defekt eines der Taktversorgungsbausteine der oder die anderen Taktversorgungsbausteine nicht in gleicher Weise falsch reagieren müssen. Dabei sollen auch etwaige Änderungen der Phasenlage zwischen dem durch einen Taktversorgungsbaustein an den zugeordneten Mikrocomputer ausgeebenen Systemtakt und den Ausgangssignalen dieses Mikrocomputers ausgeregelt werden, so daß sich für den Vergleich der Ausgangssignale der Mikrocomputer des Multimikrocomputersystems besonders gute Voraussetzungen ergeben.

Erfindungsgemäß wird die Aufgabe dadurch gelöst, daß die Taktversorgungsbausteine als Phasenregler ausgeführt sind, wobei mindestens ein Teil der Baugruppen jedes Mikrocomputers in den zugeordneten Phasenregler mit einbezogen ist, derart, daß ein Baugruppenausgang des Mikrocomputers an den Eingang eines weiterhin mit dem Quarzgenerator verbundenen Phasendetektors des Phasenreglers angeschlossen ist.

Eine Weiterbildung der Erfindung sieht vor, daß der Phasenregler außer einem digitalen Phasendetektor eine diesem nachgeschaltete, als Tiefpaß ausgebildete Filterschaltung und eine an diese angeschlossene spannungsgesteuerte Oszillatorschaltung enthält mit einem Aussteuerungsbereich, der innerhalb der zulässigen Frequenztoleranzen des Mikrocomputers liegt. Diese Ausbildung der Taktstromversorgung bringt noch einen besonderen Sicherheitsvorteil dahingehend, daß im Falle einer unzulässigen Frequenzdrift des gemeinsamen Quarzgenerators die diesem nachgeschalteten Taktversorgungsbausteine unverzüglich einer Fehlregelung unterliegen, da sie nicht mehr in dem vorgegebenen Frequenzbereich arbeiten. Die Fehlregelungen haben zur Folge, daß die einzelnen Taktversorgungsbausteine an den jeweils zugeordneten Mikrocomputer Systemtakte unterschiedlicher Frequenz ausgeben, so daß mit Sicherheit eine derartige Verfälschung des normalen Computergleichlaufs erfolgt, daß dies unverzüglich zu einem gewünschten Abschaltvorgang führt, so daß keine gefahrbringenden Informationen an den zu sichernden Prozeß ausgegeben werden.

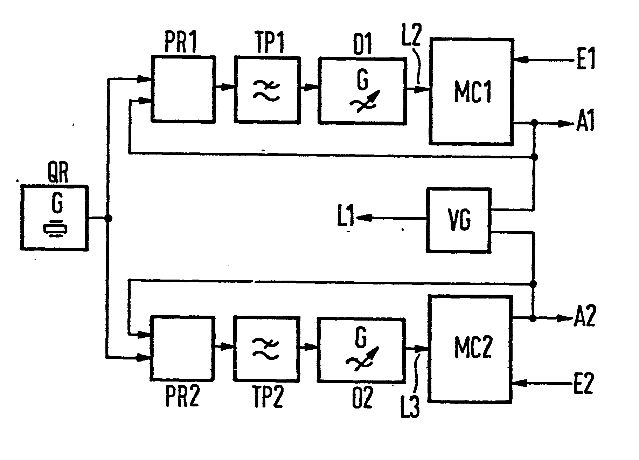

Ein Ausführungsbeispiel der Erfindung ist in der Figur als Blockschaltbild dargestellt und wird nachfolgend näher erläutert.

Die Zeichnung zeigt im Blockschaltbild wesentliche Baugruppen eines zweikanaligen Multimikrocomputersystems ; es enthält somit nur zwei Mikrocomputer MC1 und MC2. Diese erhalten über Eingangsleitungen E1 bzw. E2, die symbolisch für eine Vielzahl von Eingängen stellvertretend dargestellt sind, gleichzeitig gleichartige Informationen von einem zu steuernden Prozeß, dessen Prozeßelemente nicht weiter dargestellt sind.

Sie sind für die Erläuterung der Taktstromversorgung des zweikanaligen Mikrocomputersystems nicht von Bedeutung. Wesentlich ist noch zu wissen, daß bei der Anwendung dieses zweikanaligen Mikrocomputersystems für Sicherungszwecke, speziell für Eisenbahnsicherungsanlagen, das System so aufgebaut ist, daß im Falle einer Störung in einem der beiden Mikrocomputer MC1 bzw. MC2 ein Abschaltvorgang derart eingeleitet wird, daß von keinem der beiden Kanäle gefahrbringende Informationen an den Prozeß ausgegeben werden können. Dies kann beispielsweise dadurch erfolgen, daß beide Mikrocomputer MC1 und MC2 abgeschaltet oder aber mindestens deren Ausgabeschaltungen (nicht dargestellt) unwirksam gemacht werden. Eine andere Möglichkeit ist ein Abschaltvorgang bezüglich der Systemtakte.

Zur Gewinnung eines Abschaltkriteriums ist stellvertretend für eine Vielzahl von Vergleichern ein einziger Vergleicher VG eingangsseitig an je eine Ausgangsleitung A1 bzw. A2 der beiden Mikrocomputer MC1 und MC2 angeschlossen. Es sei bemerkt, daß jeder der Mikrocomputer MC1 bzw. MC2 über eine Vielzahl von Ausgangsleitungen verfügt, die aber im Hinblick auf eine bessere Übersichtlichkeit der Darstellung nicht eingezeichnet sind. Der Vergleicher VG hat eine Ausgangsleitung L1, über welche das erwähnte Abschaltkriterium ausgegeben wird.

Zur Taktstromversorgung des zweikanaligen Mikrocomputersystems ist ein einziger Quarzgenerator QR vorgesehen mit einer Taktfrequenz, die mit der Frequenz der über die Leitungen L2 und L3 den Mikrocomputern MC1 und MC2 zugeführten Systemtakten übereinstimmt. An den Quarzgenerator QR sind zwei Taktversorgungsbausteine in Form von Phasenreglern angeschlossen, die praktisch in jedem Falle ein eigenes Zeitnormal aufweisen. Im einzelnen bestehen die Taktversorgungsbausteine aus einem Phasendetektor PR1 bzw. PR2, einem diesen nachgeschalteten Tiefpaß TP1 bzw. TP2 und jeweils einem an den Tiefpaß angeschlossenen spannungsgesteuerten Oszillator 01 bzw. 02. Die Oszillatoren 01 bzw. 02 sind in vorgegebenen Grenzen freischwingend, jedoch durch eine Steuerspannung mit einem Aussteuerungsbereich versehen, der innerhalb der zulässigen Frequenztoleranzen des jeweils nachgeordneten Mikrocomputers MC1 bzw. MC2 liegt. Beim Ausführungsbeispiel ist der Phasenregelkreis nicht durch Rückführung der Signale des jeweiligen spannungsgesteuerten Oszillators 01 bzw. 02 auf den zugeordneten digitalen Phasendetektor PR1 bzw. PR2 geschlossen, sondern unter Einbeziehung des jeweiligen Mikrocomputers MC1 bzw. MC2. So ist beispielsweise der Ausgang A1 bzw. A2 mit einem Eingang des digitalen Phasendetektors PR1 bzw. PR2 verbunden. Dies hat den Vorteil, daß bei Verwendung von Mikroprozessoren, bei denen die Phasenlage zwischen dem zugeführten Systemtakt und den Ausgangssignalen nicht oder nur ungenügend spezifiziert ist, die Ausgangssignale der Mikrocomputer MC1 und MC2 trotzdem eine definierte Phasenlage zueinander erhalten. Hierdurch wird der synchrone Vergleich der Prozeßdaten der beiden Kanäle erleichtert.

Die dem digitalen Phasendetektor PR1 bzw. PR2 zugeführten Signale haben am Eingang des spannungsgesteuerten Oszillators 01 bzw. 02 eine Regelspannung zur Folge, derart, daß schließlich die eine mögliche Phasendifferenz zwischen den Signalen des Quarzgenerators QR und den Signalen auf der Ausgangsleitung A1 bzw. A2 zu Null geregelt wird.

Verfälschungen der vom Quarzgenerator QR abgegebenen Signale haben einen asynchronen Lauf der spannungsgesteuerten Oszillatoren 01 und 02 zur Folge, derart, daß über die Leitungen L2 und L3 unterschiedliche Systemtakte ausgegeben werden. Dies hat in den beiden Mikrocomputern MC1 und MC2 derartige Verarbeitungsunterschiede zur Folge, daß unweigerlich mit Hilfe des Vergleichers VG einer der oben beschriebenen Abschaltvorgänge erfolgt.

Die beschriebene Taktstromversorgung kann ohne weiteres auf mehr als zwei Mikrocomputer MC1 und MC2 ausgedehnt werden ; es brauchen lediglich weitere Taktversorgungsbausteine in Form von Phasenreglern vorgesehen werden, und zwar in einer Anzahl, die der Zahl der erforderlichen Mikrocomputer des jeweiligen Multimikrocomputersystems entspricht.

**Patentansprüche**

1. Taktstromversorgung für ein Multimikrocomputersystem in Eisenbahnsicherungsanlagen, bei denen die Mikrocomputer aus Sicherheitsgründen dieselben Daten verarbeiten, wobei für jeden Mikrocomputer zum Erzeugen eines Systemtaktes ein gesonderter Taktversorgungsbaustein mit eigenem Zeitnormal vorgesehen ist und alle Taktversorgungsbausteine an einen gemeinsamen Quarzgenerator angeschlossen sind, dadurch gekennzeichnet, daß die Taktversorgungsbausteine als Phasenregler (PR1, TP1, O1 bzw. PR2, TP2, O2) ausgeführt sind, wobei mindestens ein Teil der Baugruppen jedes Mikrocomputers (MC1, MC2) in den zugeordneten Phasenregler (PR1, TP1, O1 bzw. PR2, TP2, O2) mit einbezogen ist, derart, daß ein Baugruppenausgang (A1 bzw. A2) des Mikrocomputers (MC1 bzw. MC2) an den Eingang eines weiterhin mit dem Quarzgenerator (QR) verbundenen Phasendetektors (PR1 bzw. PR2) des Phasenreglers angeschlossen ist.

2. Taktstromversorgung nach Anspruch 1, dadurch gekennzeichnet, daß der Phasenregler außer einen digitalen Phasendetektor (PR1 bzw. PR2) eine diesem nachgeschaltete, als Tiefpaß ausgebildete Filterschaltung (TP1 bzw. TP2) und eine an diese angeschlossene spannungsgesteuerte Oszillatorschaltung (O1 bzw. O2) enthält mit einem Aussteuerungsbereich, der innerhalb der zulässigen Frequenztoleranzen des Mikrocomputers (MC1 bzw. MC2) liegt.

**Claims**

1. Clock current supply for a multimicrocomputer system in railways safety equipments, in which the micro computers process the same data for safety reasons, a separate clock supply chip with its own time standard being provided for generating a system clock for each micro computer and all clock supply chips being connected to a common crystal clock generator, characterised in that the clock supply chips are constructed as phase controllers (PR1, TP1, O1 and PR2, TP2, O2, respectively), at least a part of the assemblies of each micro computer (MC1, MC2) being included in the associated phase controller (PR1, TP1, O1 and PR2, TP2, O2, respectively), in such a manner that an assembly output (A1 and A2, respectively) of the micro computer (MC1 and MC2, respectively) is connected to the input of a phase detector (PR1 and PR2, respectively) of the phase controller, which is also connected to the crystal clock generator (QR).

2. Clock current supply according to Claim 1, characterised in that the phase controller, apart from a digital phase detector (PR1 and PR2, respectively), contains a filter circuit (TP1 and TP2, respectively) which follows the phase detector and is constructed as low-pass filter, and a voltage-controlled oscillator circuit (O1 and O2, respectively) which is connected to this filter circuit, with a control range which is within the permissable frequency tolerances of the micro computer (MC1 and MC2, respectively).

**Revendications**

1. Système d'alimentation délivrant le courant de cadence pour un système à plusieurs microordinateurs dans des installations de sécurité des chemins de fer, dans lesquelles, pour des questions de sécurité, les microordinateurs traitent les mêmes données, auquel cas pour chaque microordinateur il est prévu, pour la production de la cadence du système, un module particulier d'alimentation délivrant la cadence et comportant son propre étalon de temps et tous les modules d'alimentation délivrant la cadence sont raccordés à un générateur à quartz commun, caractérisé par le fait que les modules d'alimentation délivrant la cadence sont réalisés sous la forme de régulateurs de phase (PR1, TP1, O1 ou PR2, TP2, O2), au moins une partie des modules de chaque micro-ordinateur (MC1, MC2) étant insérée conjointement dans les régulateurs de phase associés (PR1, TP1, O1 ou PR2, TP2, O2) de telle sorte qu'une sortie (A1 ou A2) du module du microordinateur (MC1 ou MC2) est raccordée à l'entrée d'un détecteur de phase (PR1 ou PR2), reliée en outre au générateur à quartz (QR) du régulateur de phase.

2. Système d'alimentation délivrant un courant de cadence suivant la revendication 1, caractérisé par le fait que le régulateur de phase contient, outre un détecteur numérique de phase (PR1 ou PR2), un circuit de filtre (TP1 ou TP2) branché en aval de ce détecteur de phase et réalisé sous la forme d'un filtre passe-bas, et un circuit oscillateur (O1 ou O2) commandé par la tension, raccordé à ce circuit de filtre et comportant une plage d'attaque se situant l'intérieur des tolérances de fréquence admissibles du microordinateur (MC1 ou MC2).